# EUROPÄISCHE PATENTSCHRIFT

(11) **EP 2 891 553 B1**
(45) Veröffentlichungstag und Bekanntmachung des Hinweises auf die Patenterteilung: **28.02.2018**
(21) Anmeldenummer: 14194838.0
(22) Anmeldetag: 26.11.2014
(51) Int. Cl.: B29C 67/00

(54) **Verfahren sowie Vorrichtung zur Herstellung eines dreidimensionalen Gegenstands**
Method and device for producing a three dimensional object
Procédé et dispositif de fabrication d'un objet tridimensionnel

(30) Priorität: 20.12.2013 DE 102013114678
(43) Veröffentlichungstag der Anmeldung: 08.07.2015
(73) Patentinhaber: Conrad Electronic SE, 92240 Hirschau (DE)
(72) Erfinder: Greiner, Harald, 92660 Neustadt an der Waldnaab (DE)
(74) Vertreter: Stippl, Hubert

(56) Entgegenhaltungen:
- EP-A1- 2 329 935
- WO-A2-2009/134300
- DE-A1-102011 121 956
- US-A1- 2007 228 592
- US-A1- 2013 089 642
- US-B1- 6 629 011

## Beschreibung

Die vorliegende Erfindung betrifft ein Verfahren zur Herstellung eines dreidimensionalen Gegenstands einer vorbestimmten Form gemäß dem Oberbegriff des Anspruchs 1. Ferner betrifft die vorliegende Erfindung eine Vorrichtung zur Herstellung eines dreidimensionalen Gegenstands gemäß dem Oberbegriff des Anspruchs 7 Das Verfahren wird auch "3D Druckverfahren" und die entsprechende Vorrichtung "3D Drucker" genannt.

Ein entsprechendes Verfahren sowie Vorrichtung ist aus der DE 696 26 131 T2 bekannt. Es handelt sich hierbei um einen 3D-Drucker zur Fertigung von Gegenständen durch einen schichtweisen Aufbau des Materials (layer manufacturing process) bei dem durch eine sequenzielle, mustermäßige Deposition mehrerer Schichten eines verfestigbaren Materials auf einem Trägerelement ein dreidimensionaler körperlicher Gegenstand erzeugt werden kann. Die Steuerung des 3D-Druckers erfolgt über eine datenmäßige Vorgabe des dreidimensionalen Gegenstands in einem X,Y sowie Z-Koordinatensystem. Die mechanischen Komponenten des 3D-Druckers bilden die 3D-Daten sequenziell ab, wodurch der Gegenstand mit fortlaufender Zeit geschaffen wird. Hierbei kommt es häufig vor, dass das Trägersubstrat bzw. die Trägerplatte herstellungsbedingt nicht exakt plan ist. Dies kann beispielsweise daran liegen, dass Trägerplatten aus Keramik verwendet werden, die gebrannt werden müssen und sich durch ein ungleichmäßiges Schwindungsverhalten eine Unebenheit einstellt. Darüber hinaus kommt es bei Trägerplatten aus Metall oder Kunststoff aufgrund unterschiedlicher Temperaturausdehnungskoeffizienten häufig zu Unebenheiten, da über die Trägerplatte üblicherweise Wärme zugeführt wird. Beim Herstellen des dreidimensionalen körperlichen Gegenstands kann eine Unebenheit des Trägers dazu führen, dass erste Schichten an manchen Stellen nicht exakt auf dem Träger aufliegen. Dies führt wiederum zu einer fehlerhaften Ausformung des Gegenstands d. h. zu einem unsauberen Druckbild. Auch wenn man versucht, diesen Fehler durch eine Nivellierung oder einen Ausgleich der Trägerplatte zu reduzieren, ist dies nur unzureichend möglich oder zumindest mit einem sehr großen Zeitaufwand verbunden. US6 629 011 B1 und EP 2 329 935 A1 beschreiben beide ebenfalls Verfahren zur Herstellung eines dreidimensionalen Gegenstands.

### Aufgabe der vorliegenden Erfindung

Die Aufgabe der vorliegenden Erfindung besteht darin, ein neuartiges gattungsgemäßes Verfahren sowie eine entsprechend gattungsgemäße Vorrichtung zur Verfügung zu stellen, mit dem bzw. der ein verbessertes Druckbild erzielbar ist.

### Lösung der Aufgabe

Die vorstehende Aufgabe wird durch die Merkmale der unabhängigen Ansprüchen 1 und 7 gelöst. Zweckmäßige Ausgestaltungen der Erfindung sind in den unter- und nebengeordneten Ansprüchen beansprucht.

Die erfindungsgemäße Verfahren ermöglicht es, im Rahmen eines automatisierten Systems während des Herstellungsvorgangs die jeweilige Höhenposition bzw. Position in Z-Richtung der Düse des Extruders in Abhängigkeit der jeweiligen, aufgrund der Unebenheit der Oberfläche des Trägers, ständig anzupassen. Das Ausgeben des thermisch verfestigbaren Materials (d. h. eines Materials, welches durch Hitzeinwirkung verflüssigt und durch Kühlung wieder verfestigt werden kann) von der Düse des Extruders aus erfolgt somit in gleichbleibender relativer Höhelage zur Oberfläche des Trägers. Der Spalt zwischen Düse und Oberfläche des Trägers auch bei Unebenheiten des Trägers kann automatisch konstant gehalten werden. Hierdurch können die durch die Unebenheiten des Trägers bzw. der Trägerplatte bedingten nachteiligen Produktionsergebnisse vermieden werden. Langwierige mechanische Justierarbeiten entfallen gänzlich.

Zur Vermessung der Oberfläche des Trägers in Bezug auf die Z-Richtung wird ein Nullpunkt bezogen auf die Z-Richtung gesetzt und ausgehend von dem Nullpunkt an verschiedenen Stellen des Trägers der Verfahrweg der Düse zur Oberfläche des Trägers hin ermittelt. Hierdurch erhält man die Abweichungen der Ebenheit des Trägers zum Nullpunkt. Zudem wird der in Z-Richtung vorgesehene Offset des mechanischen Aufbaus der Vorrichtung stets bei der Messung mit einbezogen und wirkt sich somit nicht schädlich aus. Bei dem tatsächlich ermittelten Höhenunterschied von der Düse des Extruders zur Oberfläche des Trägers wirkt sich somit der durch den mechanischen Aufbau bedingte Offset in Z-Richtung nicht aus.

Die Feststellung des Verfahrweges der Düse des Extruders in der Höhe (Z-Richtung) erfolgt zweckmäßigerweise mit einer Wegstreckenmessung und einer begleitenden Kraftmessung bzw. Druckmessung. Die Messung der Wegstrecke erfolgt zweckmäßigerweise über die Erfassung des Verfahrweges des Antriebs beispielsweise der Umdrehungen eines Servomotors. Die Endposition des Verfahrwegs erfolgt durch Überwachung der Kontaktkraft der Düse an der Oberfläche des Trägers. Es wird also durch die Kraftmessung festgestellt, wenn die Düse nach einer Veränderung der Höhenposition die Oberfläche des Trägers berührt. Diese Maßnahme ermöglicht es zudem, auch andere Betriebskriterien beim Betrieb der Vorrichtung mit einzubeziehen, nämlich z.B. Erfassung einer Minderleistung oder eines Ausfalls der Heizeinrichtung für das zugeführte Rohstoff-Filament. Dieses bedingt nämlich eine Veränderung der Druckverhältnisse an der Düse, beispielsweise dann, wenn der Vorschub für das Kunststoff-Filament trotz Minderleistung oder Ausfalls der Heizeinrichtung weiterläuft.

Ebenso kann ein Zustand festgestellt werden, bei dem sich die Druckverhältnisse an der Düse dadurch ändern, dass die Zufuhr des Rohstoff-Filamentes, beispielsweise bedingt durch eine Verhakung oder Verklemmung auf der Vorratsrolle oder ein bedingt durch ein Abreißen des Rohstoff-Filamentes nicht mehr stattfindet. Die Überwachung der Kräfteverhältnisse an der Düse des Extruders hat daher in mehrfacher Hinsicht Vorteile.

Vorzugsweise werden eine Mehrzahl von Messdaten an unterschiedlichen Positionen entlang der X-Y Fläche des Trägers, vorzugsweise nach Art einer Matrix oder eines Rasters, ermittelt. Hierdurch ergibt sich eine Mehrzahl von Messpunkten bezüglich der Ebenheit der Oberfläche des Trägers. Diese Mehrzahl von Messpunkten können in einfacher Weise vor Beginn des Herstellungsverfahrens angesteuert, die Messdaten dort generiert und anschließend im System abgespeichert werden.

Zur Festlegung der weiteren Steuerungsdaten kann in einfacher Weise zwischen den Messpunkten eine Interpolation und/oder Extrapolation der Messdaten vorgenommen werden. Hierdurch können in einfacher Weise eine Vielzahl von Steuerungsdaten über die gesamt X-Y Fläche des Trägers zum Ausgleich von Unebenheiten desselben generiert werden.

Eine weitere, auch nebengeordnete beanspruchte, Variante des Verfahrens ist dadurch gekennzeichnet, dass während des Betriebs die auf die Düse oder den Tragrahmen einwirkenden Kräfte gemessen werden, ein Kräfte-Bereich definiert wird, die innerhalb des Kräfte-Bereich liegenden Messwerte einen störungsfreien Betriebszustand repräsentieren und die außerhalb des Kräfte-Bereich liegenden Messwerte einen gestörten Betriebszustand repräsentieren. Dieses Verfahren bewirkt, dass beispielsweise bei sich aufgrund eines Heizungsausfalls ändernder Kontaktkraft eine Abschaltfunktion automatisch ausgelöst werden kann. Im letzteren Fall würde die Kontaktkraft aufgrund des Mangels der Verflüssigung mechanisch verstärkt auf die Düse bzw. den Tragrahmen einwirkenden thermoplastischen Filaments eine sich zusätzliche Kräftebelastung ergeben, die detektiert werden würde.

In gleicher Weise würde eine Reduzierung der "normalen" Kräfteverhältnisse im Bereich der Düse oder des Tragrahmens darauf hindeuten, dass kein thermoplastisches Filament mehr zugeführt wird, beispielsweise wegen eines Bruchs oder dergleichen. Dies ist besonders wichtig, da derartige Vorrichtungen üblicherweise keine Rohstoff-Filamenterkennung aufweisen d. h. auch bei gestörten Zufuhrverhältnissen weiterarbeiten d. h. weiterdrucken. Dies führt vor allem bei großen räumlichen Objekten zu erheblichen Nachteilen in Bezug auf Kosten und Material.

Die Erfindung betrifft des Weiteren, auch nebengeordnet beansprucht, eine Vorrichtung zur Herstellung eines dreidimensionalen körperlichen Gegenstands gemäß dem Oberbegriff des Anspruchs 7. Dementsprechend umfasst die Vorrichtung mindestens eine Kraftmesseinrichtung zur Messung einer auf die Düse einwirkenden Kraft.

Die Erfindung ermöglicht es, auch bestehende 3D-Drucker mit einer Kraftmesseinrichtung zur Messung der auf die Düse einwirkenden Kräfte nachzurüsten. Zweckmäßigerweise befindet sich die Kraftmesseinrichtung am oder zumindest im Bereich der Düse, des Extruders oder des Tragrahmens für den Extruder.

Als Kraftmesseinrichtung kann mindestens ein sogenannter Dehnmessstreifen und/oder eine Kraftmessdose vorgesehen sein. Diese erzeugen elektrische Signale, die in die entsprechenden Messwerte umgerechnet werden können.

Vorzugsweise ist die Kraftmesseinrichtung im Bereich eines Biege- und/oder Torsionsmoduls der erfindungsgemäßen Vorrichtung befestigt. Dieses Biege- und/oder Torsionsmodul ist derart ausgestaltet und/oder dimensioniert, dass im Bereich desselben eine messbare Biegung und/oder Torsion aufgrund der an der Düse vorherrschenden Druckverhältnisse stattfindet.

Zweckmäßigerweise wird das Biege- und/oder Torsionsmodul so in die Anordnung integriert, dass es als tragendes Teil wirkt, also die Tragelast des Extruders vollständig oder zumindest teilweise aufnimmt.

Ferner umfasst die erfindungsgemäße Vorrichtung auch nebengeordnet beansprucht, eine Stopp- und Restartfunktion.

### Beschreibung der Erfindung anhand eines Ausführungsbeispiels

Nachstehend wird eine zweckmäßige Ausgestaltung des erfindungsgemäßen Verfahrens bzw. der betreffenden Vorrichtung näher erläutert. Es zeigen:
- Fig. 1: eine zweckmäßige Ausgestaltung einer erfindungsgemäßen Vorrichtung zur Herstellung eines dreidimensionalen Gegenstands in stark vereinfachter, schematischer Darstellungsweise;
- Fig. 2: eine Draufsicht auf den Träger der Vorrichtung gemäß Fig. 1;
- Fig. 3: eine Darstellung des Trägers in einer stark vereinfachte schematischen Darstellung von Teilen der Vorrichtung gemäß Fig. 1 bei der Erzeugung von Messdaten in Z-Richtung;
- Fig. 4: eine schematische Darstellung des Ausgleichs der Unebenheit der Oberfläche des Trägers sowie
- Fig. 5: die Darstellung der Überwachung der Betriebsbedingungen während der Herstellung des dreidimensionalen körperlichen Gegenstands bei einem störungsfreien Lauf (Fig. 5A), bei außerordentlichem Druckaufbau im Bereich der Düse (Fig. 5B) sowie bei außerordentlichem Druckabfall im Bereich der Düse (Fig. 5C).

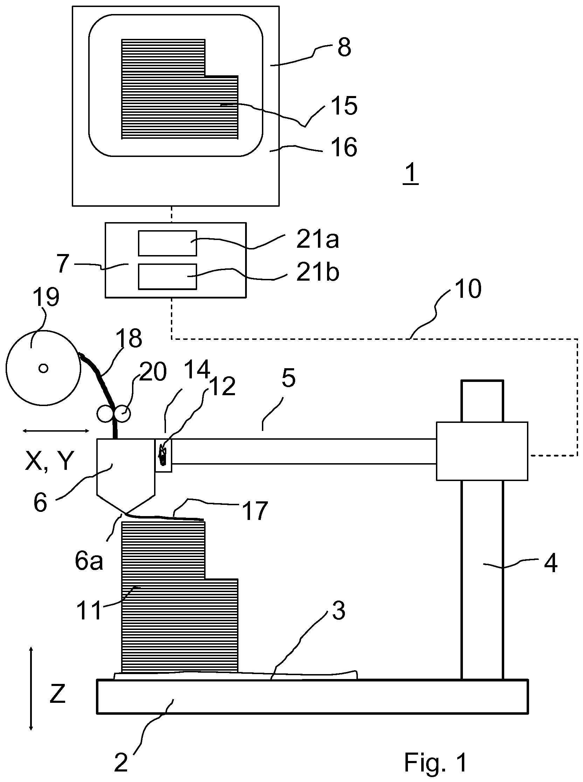

Fig. 1 zeigt eine allgemeine Darstellung des Prozessablaufs einer Vorrichtung zur Herstellung eines dreidimensionalen körperlichen Gegenstands vorbestimmter Form (kurz 3D-Drucker genannt). Die Gesamtanordnung ist mit der Bezugziffer 1 gekennzeichnet und illustriert einen sogenannten extrusionsbasierten layeredmanufacturing process. Ein Prozessor enthält ein CAD-Programm oder greift zumindest auf ein solches zu, welches eine Datei 15 generiert, die die Geometrie des herzustellenden dreidimensionalen körperlichen Gegenstands 11 (3D-Modell) beschreibt. Der Prozessor 8 kann mit einem Bildschirm 16 ausgestattet sein, in dem die Bilddatei 15 zwei- und/oder dreidimensional wiedergegeben werden kann. Die Datei 15 wird über eine Kommunikationsverbindung in Form einer Daten- und/oder Steuerleitung 10 einer Steuerungseinrichtung 7, beispielsweise eines Mikroprozessors, zugeführt, der ein Programm enthält, welches die Datei 15 in einzelne Volumenelemente unterteilt, die Formen entsprechen, die aus einer Düse extrudiert werden können. Bei diesen Formen handelt es sich beispielsweise um strangartige Volumenteile, mittels denen ein dreidimensionaler Körper sequenziell aufgebaut werden kann.

Die Vorrichtung umfasst hierzu eine Grundplatte 2 beispielsweise in Form eines Druckertisches oder Befestigungsrahmens sowie einen darauf befindlichen Träger 3, auf dessen Oberfläche der dreidimensionale körperliche Gegenstand 11 aufgebaut wird. Der Träger 3 kann beispielsweise aus Keramik, Metall oder Kunststoff bestehen. Der Vorteil eines Trägers aus Keramik oder Metall besteht darin, dass der Träger hitzeverträglich ist bei Bedarf beheizt werden kann. Bei der Herstellung des dreidimensionalen Gegenstandes 11 ist darauf zu achten, dass dieser nach dessen Fertigstellung in einfacher Weise von dem Träger 3 entfernt werden kann.

Des Weiteren umfasst die Anordnung einen Ständer 4 sowie einen Tragrahmen 5, entlang dessen ein Extruder 6 in X- sowie Y-Richtung verfahrbar angeordnet ist. Der Rohstoff wird mit dem Extruder 6 in Form von eines endlosen, drahtförmigen Rohstoff-Filament 18, welches auf einer Vorratsrolle 19 aufgewickelt ist, mittels einer Vorschubeinrichtung z. B. in Form eines Walzenpaares 20 vorzugsweise getaktet zugeführt. Im Extruder 6 befindet sich ein in Fig. 1 nicht dargestelltes Heizelement, welches das Rohstoff -Filament verflüssigt, so dass an der Düse 6a des Extruders 6 durch Austritt des Materials mit gleichzeitiger Bewegung des Extruders 6 in X und/oder Y-Richtung strangförmige Volumenelemente 17 sequenziell erzeugt werden und hierdurch mit der Zeit ein dreidimensionaler Körper 11 aufgebaut werden kann. Die Geschwindigkeiten und Depositionsraten werden durch die Steuerungseinrichtung 7 vorgegeben und über Fig. 1 nicht dargestellte Stellmotoren vollzogen.

Weiterhin befindet sich im Bereich der Steuerungseinrichtung 7 ein Anzeige- und/oder Eingabefeld 21a für Standardoperationsbedingungen. Zweckmäßigerweise kann die Steuerungseinrichtung 7 ein weiteres Anzeige- und/oder Eingabefeld 21b aufweisen, welches eine Stopp- und/oder Restartfunktion beinhaltet. Dies ist von besonderem Interesse, wenn in dem herzustellenden dreidimensionalen Gegenstand ein Teil eingelegt werden soll. Das Teil kann somit bei einem halbfertigen dreidimensionalen Gegenstand nach Unterbrechung des Herstellungsverfahrens eingelegt und anschließend der Vorgang fortgesetzt werden.

Erfindungsgemäß umfasst die Anordnung mindestens eine Kraftmesseinrichtung 12. Diese ist vorzugsweise im Bereich des Extruders 6 angeordnet und dient dazu, Messwerte zu generieren, die als zusätzliche Information in das Verfahren eingeführt werden können.

Die Vorrichtung kann ein Biege- und/oder Torsionsmodul 14 umfassen. Der Extruder 6 kann beispielsweise über das Biege- und/oder Torsionsmodul 14 mit dem Tragrahmen 5 verbunden sein. Das Biege- und/oder Torsionsmodul 14 kann hierbei am Tragrahmen 5 so verbaut sein, dass es selbst eine tragende Funktion ausübt. Das Biege- und/oder Torsionsmodul 14 ist geformt und/oder dimensioniert, dass eine Biegung, Stauchung und/oder Torsion aufgrund einer am Extruder 6 oder dessen Düse 6a einwirkenden Kraft messbar werden. Zur Messung kann beispielsweise mindestens ein Dehnmessstreifen als Kraftmesseinrichtung 12 vorgesehen sein. Ein am Extruder 6 angreifendes Kraftmoment wird folglich mittels der Kraftmesseinrichtung 12 z. B. als eine elektrische Spannung oder ein elektrischer Strom erfasst oder gegebenenfalls nach Verstärkung für zusätzliche Steuerungsfunktionen in der Steuerungseinrichtung 7 verwendet.

Vorzugsweise kann die Kraftmesseinrichtung 12 dazu verwendet werden, zusätzliche Daten zur Verfügung zu stellen, um eine Anpassung der Spaltbreite zwischen der Düse 6a und der Oberfläche des Trägers 3 oder des aufgebrachten Materials während des Formgebungsvorgangs vorzunehmen. Es wurde gefunden, dass es zur Erzielung eines optimalen Druckergebnisses vorteilhaft ist, wenn während des Druckvorgangs der Abstand der Düse 6a zur Oberfläche des Trägers bzw. zur Oberfläche der auf den Träger 3 in Form der Volumenelemente 17 aufgebrachten Materialschicht konstant bleibt.

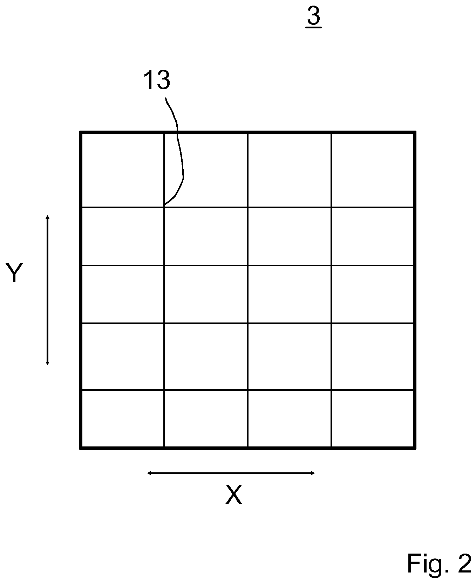

Hierfür werden vor dem Formgebungsvorgang eine Mehrzahl von Messungen entlang der Messung des Trägers 3 vorgenommen. Messpunkte 13 sind beispielsweise die Schnittpunkte der Koordinatenlinie der X- und Y-Achse in Fig. 2, wobei der Übersichtlichkeit halber in Fig. 2 lediglich ein Messpunkt der Mehrzahl von Messpunkten mit der Bezugsziffer 13 versehen ist.

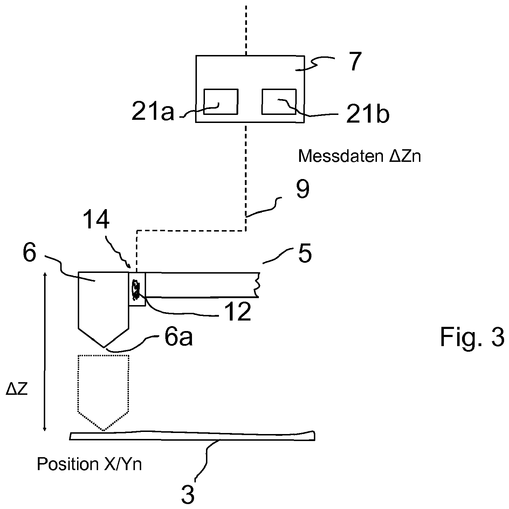

An diesen Messpunkten erfolgt, siehe Fig. 3, unter zu vorheriger Festlegung eines 0-Punkts eine Messung der Höhe ΔZ ausgehend vom 0-Punkt bis zur Oberfläche des Trägers 3 durch Verfahren des Extruders 6 mittels der zugehörigen Stellmotoren. Der Verfahrweg wird hierbei durch die von den Stellmotoren vollzogenen Umdrehungen ermittelt. Die Endposition der Verfahrstrecke, also der Moment, wenn die Düse 6a des Extruders 6 (vgl. gepunktete Position des Extruders in Fig. 3) an der Oberfläche des Trägers 3 anstößt, wird mittels der Kraftmesseinrichtung 12 erfasst, da in diesem Fall durch den Kontakt des Extruders an der Oberfläche des Trägers 3 ein mechanischer Widerstand entsteht, der als Kraft messbar ist. Die Messdaten für den Höhenunterschied ΔZ betreffen eine bestimmte Position X/Y. Sie werden der Steuerungseinrichtung zugeführt und datentechnisch der zugehörigen X/Y Position zugeordnet. Entsprechende Erfassungen von ΔZ werden an verschiedenen Punkten entlang der Oberfläche des Trägers 3, wie dies in Fig. 2 wiedergegeben ist, vorgenommen. Daraus erhält man ein Raster aus einzelnen Messpunkten 13. Zwischen den Messpunkten 13 können die Daten interpoliert werden, so dass hierdurch kontinuierliche Daten hinsichtlich der Ebenheit des Trägers 3 entstehen und für die Steuerung genutzt werden können. Die Messdaten ΔZn werden über eine Datenleitung 9 an die Steuerungseinrichtung 7 übertragen. Ausgehend von diesen Messdaten können somit zusätzlich Steuerungsdaten von der Steuerungseinrichtung generiert werden, die eine Anpassung d. h. ein Konstanthalten des Spalts zwischen der Düse 6a des Extruders 6 und einer unebenen Oberfläche des Trägers 3 ermöglichen. Auf diese Weise ist es möglich, während der Herstellung des dreidimensionalen Gegenstandes die Spaltbreite konstant zu halten, wodurch auch bei einem unebenen Träger 3 eine 3D Form hoher Güte erzielt werden kann.

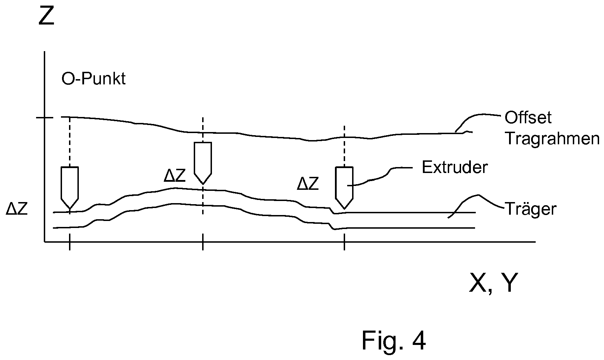

Fig. 4 zeigt in stark vereinfachter, schematischer Darstellungsweise die Verfahrensweise der Anpassung der Position des Extruders 6 zur Oberfläche des Trägers 3. Es wird deutlich, dass auch bei Unebenheiten des Trägers das erfindungsgemäße Verfahren bzw. die erfindungsgemäßen Vorrichtung es ermöglicht, in einfacher Weise den Spalt konstant halten zu können. Da lediglich der Abstand zwischen dem Extruder und der Oberfläche des Trägers gemäß dem erfindungsgemäßen Verfahren abgetastet wird, macht sich eine Ungenauigkeit aufgrund des Verzugs des Rahmens oder anderer beweglicher Teile nicht nachteilig bemerkbar.

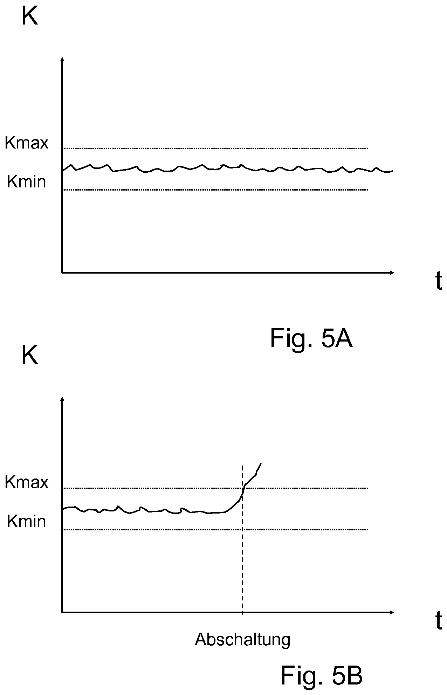

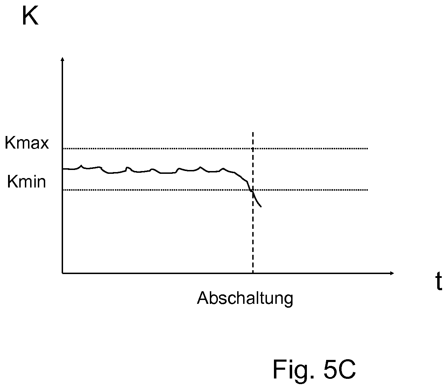

Die Kraftmesseinrichtung 12 gemäß Fig. 1 kann zusätzlich oder alternativ auch für andere Steuerungszwecke eingesetzt werden. Gemäß der Darstellung nach Fig. 5A kann in der Steuerung der Vorrichtung ein Kraftbereich (Bereich zwischen Kmax und Kmin) vorgegeben sein. Bei normalem Betrieb liegen die Messpunkte der Kraftmesseinrichtung 12 in diesem Kraftbereich. Bei normalem Betrieb ist aufgrund des Austrags der Volumenelemente 17 aus der Düse 6a des Extruders 6 eine gewisse (wenn auch kleine) Kraft über die Kraftmesseinrichtung 12 feststellbar, die der in Fig. 5A dargestellten Messlinie entspricht. Da die Zuführung des Rohstoff-Filamentes 18 (Fig. 1) über das Walzenpaar 20 vorzugsweise getaktet erfolgt, besitzt die Messkurve typischerweise eine kontinuierliche Bergauf- und Bergabform.

Nun kann es in der Praxis durchaus vorkommen, dass das im Extruder 6 befindliche (in Fig. 1 nicht dargestellte) Heizelement ausfällt. Als Folge davon kommt es aufgrund des fortwährenden Vorschubs des Rohstoff-Filamentes 18 durch das Walzenpaar 20 im Bereich des Extruders 6 beziehungsweise der Düse 6a des Extruders zu einer messbaren Krafterhöhung, die in Fig. 5B dargestellt ist. Bei Überschreiten des Wertes Kmax kann, vorzugsweise automatisch, eine Abschaltung vorgenommen werden.

Andererseits kann es sein, dass die Kraft an der Düse 6a des Extruders unter den unteren Grenzwert Kmin des Kraftbereichs fällt, z.B. nämlich dann, wenn kein Austrag des Volumenelements an der Unterseite der Düse 6a mehr erfolgt. Dies kann dann der Fall sein, wenn das Rohstoff-Filament 18 nicht weiter gefördert werden kann, z.B. aufgrund einer schlecht gewickelten und deshalb hakenden Vorratsrolle oder bei einem Riss des Rohstoff-Filamentes 18.

### BEZUGSZEICHENLISTE

- 1: 3D Drucker
- 2: Druckertisch
- 3: Träger
- 4: Ständer
- 5: Tragrahmen
- 6: Extruder
- 6a: Düse
- 7: Steuerungseinrichtung
- 8: Prozessor
- 9: Datenleitung
- 10: Daten- und/oder Steuerleitung
- 11: 3D Modell
- 12: Kraftmesseinrichtung
- 13: Kraftmesspunkt
- 14: Biege- und/oder Torsionsmodul
- 15: Datei
- 16: Bildschirm
- 17: Volumenelement
- 18: Rohstoff-Filament
- 19: Walzenpaar
- 21a: Anzeige-und/oder Eingabefeld
- 21b: Anzeige-und/oder Eingabefeld

## Patentansprüche

1. Verfahren zur Herstellung eines dreidimensionalen körperlichen Gegenstands vorbestimmter Form unter Steuerung einer Steuerungseinrichtung durch sequentielle, mustermäßige Ablagerung eines thermisch verfestigbaren Materials auf einem Träger insbesondere Trägerplatte, wobei das Verfahren folgende Verfahrensschritte umfasst:
Ausgeben des thermisch verfestigbaren Materials in einem fließfähigen Zustand von einer Düse eines Extruder in einer Höhenlage (Z-Richtung) über dem Träger,
Bildung von Volumenelementen durch Erzeugung einer relativen Bewegung zwischen der Düse des Extruders und dem Träger während des Ausgebens des thermisch verfestigbaren Materials,
Verfestigen der Volumenelemente des Materials, wobei
durch Schichtung einer Vielzahl von Volumenelemente sowohl in der Flächenerstreckung (X-Y-Richtung) als auch in der Höhe (Z-Richtung) der dreidimensionale körperliche Gegenstand aufgebaut wird,
vor dem Formgebungsverfahren des thermisch verfestigbaren Materials erfolgt eine Vermessung der Oberfläche des Trägers in Bezug auf die Z-Richtung, und
aus den Messdaten werden Steuerungsdaten gewonnen,
die für eine Korrektur der Position der Düse in Z-Richtung während des Formgebungsverfahren herangezogen werden,
**dadurch gekennzeichnet, dass**
zur Vermessung der Oberfläche des Trägers in Bezug auf die Z-Richtung ein Nullpunkt bezogen auf die Z-Richtung gesetzt wird, ausgehend von dem Nullpunkt der Verfahrweg der Düse zur Oberfläche des Trägers hin ermittelt wird und
das Ende des Verfahrweges der Düse in Z-Richtung durch Messung der Kontaktkraft der Düse an der Oberfläche des Trägers ermittelt wird.

2. Verfahren nach Anspruch 1, **dadurch gekennzeichnet, dass** die Messdaten einer Mehrzahl von Messpunkten (M) entlang der X-Y Fläche des Trägers, vorzugsweise nach Art einer Matrix, ermittelt werden.

3. Verfahren nach Anspruch 2, **dadurch gekennzeichnet, dass** zur Festlegung der Steuerungsdaten zwischen den Messpunkten eine Interpolation und/oder Extrapolation der Messdaten vorgenommen wird.

4. Verfahren nach mindestens einem der vorhergehenden Ansprüche, **dadurch gekennzeichnet, dass**
während des Betriebs die auf die Düse oder den Tragrahmen einwirkenden Kräfte gemessen werden,
ein Kräfte-Bereich definiert wird,
die innerhalb des Kräfte-Bereich liegenden Messwerte einen störungsfreien Betriebszustand repräsentieren und
die außerhalb des Kräfte-Bereich liegenden Messwerte einen gestörten Betriebszustand repräsentieren.

5. Verfahren nach Anspruch 4, **dadurch gekennzeichnet, dass** eine, vorzugsweise automatische, Abschaltung des Betriebs in Abhängigkeit davon erfolgt, ob die Messwerte innerhalb oder außerhalb des vorgegebenen Kontaktkraft-Bereich liegen.

6. Vorrichtung zur Herstellung eines dreidimensionalen körperlichen Gegenstands vorbestimmter Form unter Steuerung einer Steuerungseinrichtung durch sequentielle, mustermäßige Ablagerung mehrerer Schichten eines thermisch verfestigbaren Materials auf einem Träger insbesondere Trägerplatte, mit
einem Extruderkopf (6) mit einer Düse (6a) zum Austrag von thermisch verfestigbaren Material,
einem Tragrahmen (5), der den Extruderkopf (6) trägt,
einem Antrieb (14) für die Bewegung des Tragrahmens (5),
einer Steuerungseinrichtung (7) zur Steuerung der Funktionsabläufe,
einem Träger (3), auf dem der dreidimensionale körperliche Gegenstand hergestellt wird,
eine Kraftmesseinrichtung (12) zur Messung der auf die Düse (6a) einwirkenden Kraft, **dadurch gekennzeichnet, dass**
die Kraftmesseinrichtung (12) eingerichtet ist, ausgehend von einem ermittelten Nullpunkt, das Ende des Verfahrweges der Düse (6a) in Z-Richtung an der Oberfläche des Trägers (3) zu ermitteln.

7. Vorrichtung nach Anspruch 6, **dadurch gekennzeichnet, dass**
Kraftmesseinrichtung (12) sich am oder zumindest im Bereich der Düse (6a), des Extruders (6) oder des Tragrahmens (5) befindet.

8. Vorrichtung nach Anspruch 7, **dadurch gekennzeichnet, dass**
als Kraftmesseinrichtung (12) mindestens ein Dehnmessstreifen und/oder eine Kraftmessdose vorgesehen ist.

9. Vorrichtung nach mindestens einem der Ansprüche 6 bis 8, **dadurch gekennzeichnet, dass** die Kraftmesseinrichtung (12) im Bereich eines Biege- und/oder Torsionsmoduls (14) befestigt ist, welches ein tragendes Teil des Tragrahmens (5) der Düse (6a) bildet.

10. Vorrichtung nach mindestens einem der Ansprüche 6 bis 9, **dadurch gekennzeichnet, dass** Abstandsdaten von Extruder (6) zu Oberfläche des Trägers (3) zu Steuerung, vorzugsweise in Form einer Datenmatrix vorgesehen sind.

11. Vorrichtung nach mindestens einem der Ansprüche 6 bis 10, **dadurch gekennzeichnet, dass** eine Stopp- und Restartfunktion vorgesehen ist, die es ermöglicht, den Herstellungsprozess zu unterbrechen und zu einem späteren Zeitpunkt wieder aufzunehmen.

## Claims

1. Method for producing a three-dimensional physical object of a predetermined form under the control of a control device by sequential pattern-like deposition of a thermally solidifiable material on a carrier, in particular a carrier plate, wherein the method comprises the following method steps:
discharging the thermally solidifiable material in a flowable state from a die of an extruder in a position at a height (Z direction) above the carrier,
forming volume units by producing a relative movement between the die of the extruder and the carrier during the discharging of the thermally solidifiable material,
solidifying the volume elements of the material, wherein
the three-dimensional physical body is built up by layering a multiplicity of volume elements both in areal extent (X-Y direction) and in height (Z direction),
a measurement of the surface of the carrier with reference to the Z direction is performed before the process of moulding the thermally solidifiable material, and
the measurement data are used to obtain control data,
which are used for a correction of the position of the die in the Z direction during the moulding process,
**characterized in that**,
for measuring the surface of the carrier with reference to the Z direction, a zero point is set with respect to the Z direction, starting from the zero point the travelling distance of the die to the surface of the carrier is determined and the end of the travelling distance of the die in the Z direction is determined by measuring the contact force of the die on the surface of the carrier.

2. Method according to Claim 1, **characterized in that** the measurement data of a plurality of measuring points (M) along the X-Y surface of the carrier, preferably in the manner of a matrix, are determined.

3. Method according to Claim 2, **characterized in that**, for establishing the control data, an interpolation and/or extrapolation of the measurement data is performed between the measuring points.

4. Method according to at least one of the preceding claims, **characterized in that**
during operation, the forces acting on the die or the carrying frame are measured,
a range of forces is defined,
the measured values lying within the range of forces represent a disturbance-free operating state and
the measured values lying outside the range of forces represent a disturbed operating state.

5. Method according to Claim 4, **characterized in that**, depending on whether the measured values lie within or outside the predetermined contact force range, an operational shutdown, preferably an automatic operational shutdown, is performed.

6. Device for producing a three-dimensional physical object of a predetermined form under the control of a control device by sequential pattern-like deposition of a number of layers of a thermally solidifiable material on a carrier, in particular a carrier plate, comprising
an extruder head (6) with a die (6a) for discharging thermally solidifiable material,
a carrying frame (5), which carries the extruder head (6),
a drive (14) for the movement of the carrying frame (5),
a control device (7) for controlling the functional sequences,
a carrier (3), on which the three-dimensional physical object is produced,
a force measuring device (12) for measuring the force acting on the die (6a), **characterized in that** the force measuring device (12) is designed to determine the end of the travelling distance of the die (6a) in the Z direction on the surface of the carrier (3) on the basis of a determined zero point.

7. Device according to Claim 6, **characterized in that** the force measuring device (12) is located on or at least in the region of the die (6a), the extruder (6) or the carrying frame (5).

8. Device according to Claim 7, **characterized in that** at least one strain gauge and/or a load cell is provided as the force measuring device (12).

9. Device according to at least one of Claims 6 to 8, **characterized in that** the force measuring device (12) is attached in the region of a bending and/or torsion module (14), which forms a carrying part of the carrying frame (5) of the die (6a).

10. Device according to at least one of Claims 6 to 9, **characterized in that** distance data from the extruder (6) to the surface of the carrier (3) are provided for control, preferably in the form of a data matrix.

11. Device according to at least one of Claims 6 to 10, **characterized in that** a stopping and restarting function is provided, allowing the production process to be interrupted and resumed at a later time.

## Revendications

1. Procédé destiné à fabriquer un objet physique tridimensionnel d'une forme prédéfinie en commandant un système de commande par dépôt séquentiel, selon un modèle, d'une matière thermiquement durcissable sur un support, notamment une plaque de support, le procédé comprenant les étapes de procédé suivantes :
distribution de la matière thermiquement durcissable dans un état fluide à partir de la buse d'une extrudeuse dans une position en hauteur (direction Z) au-dessus du support,
création d'éléments de volume par génération d'un déplacement relatif ente la buse de l'extrudeuse et le support, pendant la distribution de la matière thermiquement durcissable,
solidification de l'élément de volume de la matière,
l'objet physique tridimensionnel étant construit par stratification d'une pluralité d'éléments de volume, aussi bien dans l'extension superficielle (direction X-Y), qu'également dans la hauteur (direction Z),
avant le procédé de façonnage de la matière thermiquement durcissable, une mesure de la surface du support étant exécutée par rapport à la direction Z et
des données de commande étant obtenues à partir des données de mesure,
lesquelles sont mises à contribution pour une correction de la position de la buse dans la direction Z pendant le processus de façonnage,
**caractérisé en ce que**
pour mesurer la surface du support par rapport à la direction Z, on place un point zéro par rapport à la direction Z, à partir du point zéro, on détermine le trajet de déplacement de la buse vers la surface du support et on détermine la fin du trajet de déplacement de la buse dans la direction Z en mesurant la force de contact de la buse sur la surface du support.

2. Procédé selon la revendication 2, **caractérisé en ce qu'**on détermine les données de mesure d'une pluralité de points de mesure (M) le long de la surface X-Y du support, de préférence à la manière d'une matrice.

3. Procédé selon la revendication 2, **caractérisé en ce que** pour définir les données de commande entre les points de mesure, on procède à une interpolation et/ou à une extrapolation des données de mesure.

4. Procédé selon au moins l'une quelconque des revendications précédentes, **caractérisé en ce**
**qu'**on mesure en cours de fonctionnement les forces agissant sur la buse ou sur le cadre porteur,
on définit une zone de forces,
les valeurs de mesure se situant à l'intérieur de la zone de forces représentent un état de fonctionnement sans perturbation et
les valeurs de mesure se situant à l'extérieur de la zone de forces représentent un état de fonctionnement perturbé.

5. Procédé selon la revendication 4, **caractérisé en ce**
**qu'**il s'effectue une mise à l'arrêt de préférence automatique du fonctionnement selon si les valeurs de mesure se situent à l'intérieur ou à l'extérieur de la zone de force de contact prédéfinie.

6. Dispositif destiné à fabriquer un objet physique tridimensionnel d'une forme prédéfinie en commandant un système de commande par dépôt séquentiel, selon un modèle, de plusieurs couches d'une matière thermiquement durcissable sur un support, notamment une plaque de support, comprenant
une tête d'extrusion (6) avec une buse (6a) pour la distribution de matière thermiquement durcissable,
un cadre porteur (5) qui porte la tête d'extrusion (6),
un entraînement (14) pour le déplacement du cadre porteur (5),
un système de commande (7) pour la commande des séquences de fonctionnement,
un support (3) sur lequel on fabrique l'objet physique tridimensionnel,
un système de mesure des forces (12) pour mesurer la force agissant sur la buse (6a), **caractérisé en ce que**
le système de mesure des forces (12) est aménagé pour déterminer, en partant d'un point zéro déterminé, la fin du trajet de déplacement de la buse (6a) dans la direction Z sur la surface du support (3).

7. Dispositif selon la revendication 6, **caractérisé en ce que**
le système de mesure des forces (12) se trouve sur ou au moins dans la zone de la buse (6a), de l'extrudeuse (6) ou du cadre porteur (5).

8. Dispositif selon la revendication 7, **caractérisé en ce**
**qu'**en tant que système de mesure des forces (12), il est prévu au moins une jauge de contrainte et/ou une cellule de charge.

9. Dispositif selon au moins l'une quelconque des revendications 6 à 8,
**caractérisé en ce que** le système de mesure des forces (12) est fixé dans la zone d'un module de flexion et/ou d'un module de torsion (14), lequel forme une pièce porteuse du cadre porteur (5) de la buse (6a).

10. Dispositif selon au moins l'une quelconque des revendications 6 à 9,
**caractérisé en ce que** des données d'écart entre l'extrudeuse (6) et la surface du support (3) sont prévues pour la commande, de préférence sous la forme d'une matrice de données.

11. Dispositif selon au moins l'une quelconque des revendications 6 à 10,
**caractérisé en ce qu'**il est prévu une fonction d'arrêt et de redémarrage qui permet d'interrompre le processus de fabrication et de le reprendre à un moment ultérieur.
